# EUROPEAN PATENT APPLICATION

(11) **EP 4 035 786 A1**
(43) Date of publication of application: **03.08.2022**
(21) Application number: 20870337.1
(22) Date of filing: 14.09.2020
(51) Int. Cl.: B09B 3/00, H01J 9/52

(54) **DEVICE AND METHOD FOR EXTRACTING INERT GAS**

(30) Priority: 24.09.2019 RU 2019130020
(71) Applicant: Drobenkov, Vladimir Yurievich, Balashikha, 143912 (RU); Drobenkova, Natalya Yurievna, Balashikha, 143900 (RU)
(72) Inventor: LOBACHEV, Viktor Yurievich, Moscow, 127644 (RU); DROBENKOV, Vladimir Yurievich, Balashikha, 143912 (RU); DROBENKOVA, Natalya Yurievna, Balashikha, 143900 (RU)
(74) Representative: Koudine, Andreï
(86) International application number: PCT/RU2020/050227
(87) International publication number: WO 2021/061016

(57) **Abstract**

The present group of inventions relates to devices and methods for extracting inert gas from an item comprising inert gas, primarily xenon. A device comprises an intake module, which is in the form of an airtight vacuum container that comprises an inlet for receiving the item, and a means for destroying the item; an outlet of the intake module being connected by a pipe to a valve for dispensing the extracted inert gas, said valve being connectable to a vessel for storing the inert gas, and said intake module can be used, for example, for collecting inert gas, primarily xenon, from movie projector arc lamps. According to the invention, the outlet of the intake module is connected to a vacuum pump, and also the outlet of the intake module is connected by means of a pipe, via a filter, to an inlet of a freeze-out apparatus, the outlet of which is connected to a gas holder, which is connected, via a compressor, to the valve for dispensing the extracted inert gas. A method implements the operation of the aforementioned device.

## Description

### Field of the invention

The present group of inventions relates to devices and methods for extracting inert gas from an item comprising such inert gas, primarily xenon. The device comprises an intake module, which is in the form of an airtight vacuum container that comprises an inlet for receiving the item comprising inert gas, and a means for destroying the item comprising inert gas; an outlet of the intake module being connected by a pipe to a valve for dispensing the extracted inert gas, said valve being connectable to a vessel for storing the inert gas, and said intake module can be used, for example, for collecting inert gas, primarily xenon, from movie projector arc lamps.

This invention is intended for the recovery of inert gas from an item comprising such inert gas, for example, a lamp. The provided description will use xenon to illustrate the recovery of inert gas, but in general, the method and device are also suitable for the recovery of other inert gases from the items comprising such gases, for example, krypton. Apparently, there are krypton lamps, and in principle, the proposed device and method can be used to extract krypton from such lamps. The choice of xenon as an example is based on the fact that a natural occurrence of such gas is less common, and the problem of its extraction from the items, specifically comprising xenon, is more relevant. Xenon lamps are most commonly used in projectors and stage lighting, since they have very good color rendering. Due to the small size of the emitting region, they have found application in optical devices.

A xenon arc lamp is an artificial light source, in which an electric arc shines inside a bulb filled with xenon. Such lamp emits bright white light with a spectrum close to daylight.

Technical xenon is an expensive gas. The lamps are filled with xenon under high pressure (from 15 to 300 bar) without mixing it with other inert gases (e.g., nitrogen, krypton, etc.). Therefore, extracting xenon when disposing of such lamps is technically possible and feasible.

Currently, the lamps of this type are produced by three dozens of factories around the world, located in Asia, Europe, and North America. The major manufacturers include USHIO, OSRAM, LTI (formerly, PHILIPS), CHRISTIE, YUMEX, CERMAX and some others. The total annual production is about 500 thousand lamps. Such volume is driven by the demand for these types of lamps, as well as their characteristics. Currently, there are more than 160,000 cinemas worldwide, which are using xenon arc lamps. The average service life of such lamps is 3-6 months.

Thus, the annual turnover of xenon arc lamps globally is 400-500 thousand lamps. At this time, spent lamps are either disposed of improperly (along with household waste), or stored without recycling (e.g., at the cinemas). Disposal in accordance with the existing rules and regulations is rare.

### Prior art (device)

A first aspect of the proposed group of inventions relates to a device for extracting inert gas from an item comprising such inert gas. According to the prior art, such device is described in the Chinese patent CN104550198 published in 2015.

The described device is the closest to the proposed device in terms of the technical substance and achieved technical result, and has been selected as a prototype of the device proposed by this invention.

The above patent describes a device for extracting inert gas from an item comprising such inert gas, which comprises an intake module, which is in the form of an airtight vacuum container that comprises an inlet for receiving the item comprising inert gas, and a means for destroying the item comprising inert gas; an outlet of the intake module being connected by a pipe to a valve for dispensing the extracted inert gas, said valve being connectable to a vessel for storing the inert gas.

In this prior art, raw materials are small (presumably, automotive) lamps weighing 4,65 grams and comprising 0,01 liters of xenon. In the proposed invention, it is suggested to use large movie projector lamps weighing 1-2 kg and comprising 1-2 liters of xenon as raw materials. These lamps are more fragile and, therefore, require a different loading method. A different design is required for loading an airtight vacuum container, in which each lamp has its own "pocket" so that it does not touch the other lamps prior to destruction.

It can also be noted that this prior art also comprises a "crushing" device installed directly inside the airtight vacuum container, which breaks and crushes small lamps. In the proposed invention, such device is not applicable, since due to a large size of the metal parts of the lamps, the "crusher" (as well as the airtight vacuum container) would have to be made very large. In addition, having another device in the vacuum chamber would negatively affect a quality (purity) of the product.

The main disadvantage of the prototype is that most of the processes used in the above-referenced prior art imply the use of compressors and/or pumps (i.e., forced gas pumping) in one way or another. This means that the maximum anticipated purity of inert gas (xenon) can be 90%, which would in fact require additional purification, without which the obtained inert gas (xenon) cannot be reused.

### Disclosure of the invention (device)

A first aspect of the proposed invention mainly targets a device for extracting inert gas from an item comprising such inert gas, which would allow for a safe extraction of inert gas with minimal losses from an item comprising such inert gas, while ensuring the purity of the obtained inert gas of at least 99%, which is the problem to solve.

To achieve this goal, the outlet of the intake module is connected to a vacuum pump, and the outlet of the receiving module is connected by a pipe, via a filter, to an inlet of a freeze-out device, an outlet of which is connected to a gas holder connected, via a compressor, to the valve for dispensing the extracted inert gas.

Because of such advantageous features, it becomes possible to release inert gas (xenon) from the lamps by a free flow due to the pressure and/or temperature differences created between the units. In addition, the freeze-out device is used to purify xenon and ensure the purity of the obtained inert gas of at least 99%.

There is another advantageous embodiment of the invention, in which the freeze-out device is connected to a preheater. Because of such advantageous features, it becomes possible to accelerate the process of heating xenon collected in the freeze-out device due to forced heating.

There is also an optional embodiment of the invention, in which the intake module has cells in cartridges for accommodating items comprising inert gas. Because of such advantageous features, it becomes possible to reduce a potential accidental explosion of the lamp prior to the beginning of operation of the device due to the fact that each lamp has its own "pocket" so that it does not touch the other lamps prior to the destruction.

There is yet another optional embodiment of the invention, in which the cartridges for accommodating items comprising inert gas are additionally placed in air-permeable polyethylene bags. The bags serve as additional coarse filters for solid parts of the lamps, and also increase the convenience of handling the waste after the lamps are destroyed, thus preventing contamination of the intake module.

There is yet another optional embodiment of the invention, in which the means for destroying an item comprising inert gas is embodied in the form of an electric motor, which causes a movable part of the vacuum container to vibrate. Because of such advantageous features, it becomes possible to simplify the process of destroying the item comprising inert gas.

There is yet another optional embodiment of the invention, in which the pipe is provided with valves connected to an automatic control module of the device.

Because of such advantageous features, it becomes possible to automate the operation of the device.

### Prior art (method)

A second aspect of the proposed group of inventions relates to methods for extracting inert gas from an item comprising such inert gas. According to the prior art, such method is also described in Chinese patent CN104550198 published in 2015.

Said method is the closest to the proposed method in terms of technical substance and achieved technical result, and has been selected as a prototype of the method proposed by this invention.

This prior art describes a method for extracting inert gas from an item comprising such inert gas, according to which the item comprising inert gas is placed inside an intake module, followed by destroying said item comprising inert gas and transferring the extracted inert gas via a pipe to a valve for dispensing the extracted inert gas, said valve being connectable to a vessel for storing the inert gas.

The most significant disadvantage of the prototype is that the process stages listed in the above-referenced prior art require forced pumping of gas, which implies that the maximum purity of inert gas (xenon) cannot exceed 90%, which would in fact require additional purification, without which the obtained inert gas (xenon) cannot be reused.

### Disclosure of the invention (method)

A second aspect of the proposed invention mainly targets a method for extracting inert gas from an item comprising such inert gas, which would allow for a safe extraction of inert gas with minimal losses from an item comprising such inert gas, while ensuring the purity of the obtained inert gas of at least 99%, which is the problem to solve.

To achieve this goal, prior to destroying the item comprising inert gas, the intake module is sealed, an air is pumped out of the intake module until the required vacuum is reached, and after a freeze-out device is ready for operation, said inert gas from the intake module is filtered to remove microparticles and fed to the freeze-out device, where it is liquefied and then supplied by way of heating from the freeze-out device to the gas holder, from which it is fed to the valve for dispensing the extracted inert gas.

Because of such advantageous features, it becomes possible to eliminate the forced pumping of inert gas (xenon) as well as ensure its filtration through a filter and purification, via cooling, in the freeze-out device with subsequent evaporation.

There is yet another optional embodiment of the invention, in which a waste produced by the destruction is further unloaded into a waste container.

Because of such advantageous characteristics, it becomes possible to facilitate a cyclic process of extracting inert gas from the item comprising such inert gas by removing the inert gas from a large number of items comprising such inert gas.

### Brief description of the drawings

Other distinctive features and advantages of this group of inventions clearly follow from the description provided below for illustration purposes, without limitations, which the references to the accompanying drawings, in which:
- Figure 1 represents an external view of the intake module of the device for extracting inert gas from an item comprising such inert gas, according to the invention,
- Figure 2 represents a layout diagram of the elements of the device for extracting inert gas from an item comprising such inert gas, according to the invention,
- Figure 3 represents steps of the method for extracting inert gas from an item comprising such inert gas, according to the invention.

The designations on the drawings are as follows:
1. Intake module;
2. Freeze-out device;
3. Vacuum pump;
4. Diaphragm-type compressor;
5. Heater;
6. Soft gas holder;
7. Vacuum pressure gauge;
8. Pressure gauge;
9. Compressed xenon cylinder (150-200 atm.);
10. Compressed nitrogen cylinder (150-200 atm.) or cryogenic gasifier;
11. Transport tank for liquid nitrogen;
12. Filter;
13. Vacuum shut-off valve;
14. Bellows-operated shut-off valve;
15. Cold fittings;
16. Pump vacuum gauge;
17. Gearbox;
18. Cartridges.

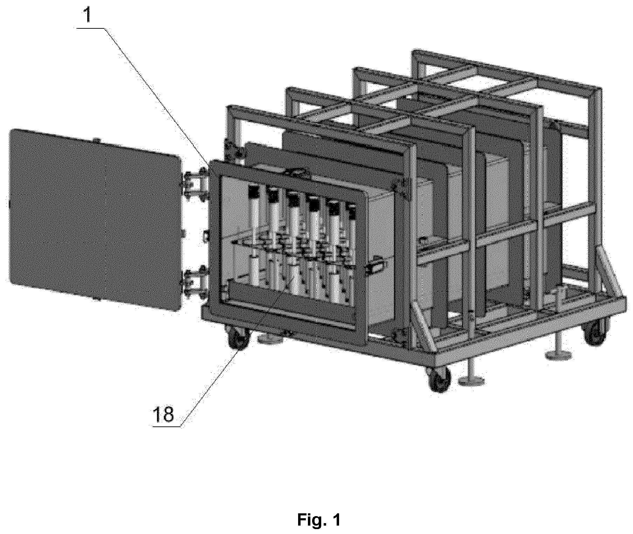

According to Figs. 1-2, a device for extracting inert gas from an item comrpising such inert gas comprises an intake module 1, which is in the form of an airtight vacuum container that comprises an inlet for receiving the item comprising inert gas, and a means for destroying the item comprising inert gas. An outlet of the intake module is connected by a pipe to a valve for dispensing the extracted inert gas, said valve being connectable to a vessel for storing the inert gas.

The outlet of the intake module is connected to a vacuum pump 3, and the outlet of the intake module is also connected by a pipe, via a filter 12, to an inlet of a freeze-out device 2, an outlet of which is connected to a gas holder 6, which is connected, via a compressor 4, to the valve for dispensing the extracted inert gas.

The freeze-out device 2 is connected to a heater 5.

The intake module has cells in cartridges 18 to accommodate items comprising inert gas.

The means for destroying an item comprising inert gas is embodied in the form of an electric motor, which causes a movable part of the vacuum container to vibrate.

The pipe is provided with valves connected to an automatic control module of the device (not shown on the drawings).

The cartridges for placing the items comprising inert gas are additionally placed in air-permeable polyethylene bags.

### Embodiments of the invention

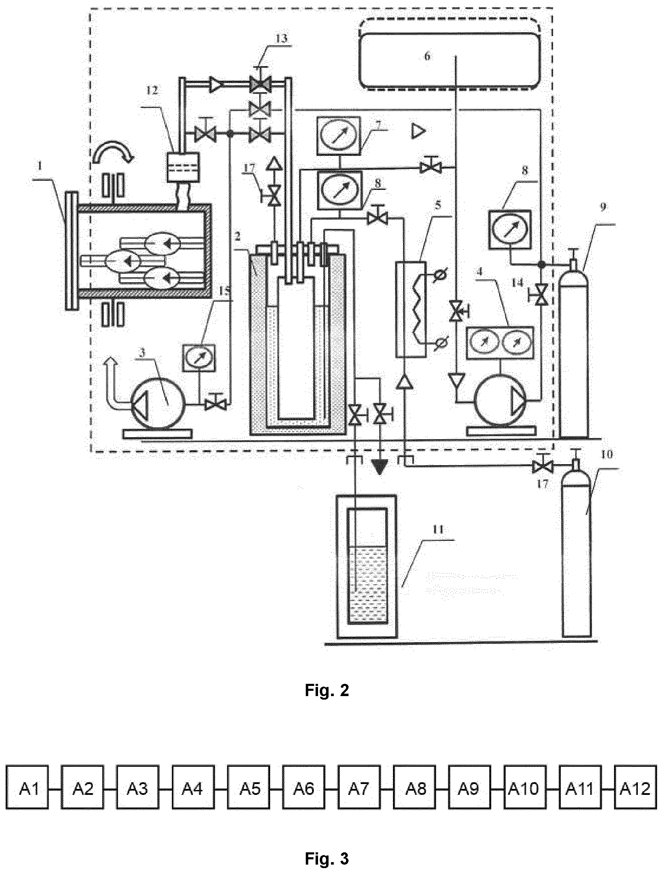

Provided below is the most comprehensive example of implementing the proposed invention. Please note that this example does not limit the application of the invention. According to Fig. 3:
**Step A1.** First, the items comprising inert gas (mainly, lamps) are placed, by an operator, into the cartridges (up to 20 cells into each cartridge) and secured therewithin.
**Step A2.** Next, the cartridges are placed into the intake module 1 (up to 3 cartridges at a time).
**Step A3.** The intake module 1 is sealed by closing.
**Step A4.** The vacuum pump 3 is used to pump out an air from the intake module 1. Once the required vacuum level is reached, the pump 3 is turned off and disconnected from the intake module 1.
**Step A5.** The lamps are destroyed by subjecting the intake module 1 to an external mechanical action. For example, the operator pushes the movable part of the intake module 1 and triggers a slight impact against the frame. Due to a special design of the cartridges, such impact is sufficient to destroy the lamps inside the intake module. The destruction is facilitated by the design of the cartridges, as well as by high gas pressure inside the items: it is enough for one lamp to "explode" to cause the destruction of the rest of the lamps inside the intake module 1.
**Step A6.** Concurrently with the evacuation process, the freeze-out device 2 is cooled down using liquid nitrogen to an operating temperature of -195°C.
**Step A7.** After the lamps are destroyed, the intake module 1 becomes filled with xenon (i.e., there is no vacuum in it, but instead, there is a gas pressure). At the same time, due to a significant decrease in temperature, a very low pressure zone is formed inside the freeze-out device 2.
**Step A8.** The access from the intake module 1 to the freeze-out device 2 is open. Due to the difference in pressure and temperature, xenon is "sucked" from the intake module 1 and is accumulated at the bottom of the freeze-out device 2 in the form of a liquid (a boiling point of xenon is about -111°C).
**Step A9.** The intake module 1 is disconnected from the freeze-out device 2, and a gradual heating is started. During this time, the intake module 1 can be cleaned and prepared for a new cycle.
**Step A10.** During the heating process, the inert gas (xenon) once again turns into gas, and the pressure inside the freeze-out device 2 starts rising.
**Step A11.** The freeze-out device 2 is connected to the soft gas holder 6. Due to the difference in pressure and temperature between the heated freeze-out device 2 and the gas holder 6, the inert gas (xenon) flows into the gas holder.
**Step A12.** The inert gas (xenon) is pumped from the gas holder 6 by a compressor into a "commercial" cylinder (9) or another container.

### Industrial applicability

The proposed device and method for extracting inert gas from an item comprising such inert gas can be practically realized by those skilled in the art and, once implemented, ensure the realization of the claimed purpose, which makes it possible to conclude that the proposed invention meets the industrial applicability criterion.

In accordance with the proposed invention, a prototype device for extracting inert gas from an item comprising such inert gas has been manufactured.

A cube-shaped vessel made of 12X18H10T metal and having an upper popup hatch was used as an intake module (airtight vacuum container). The volume of the chamber is about 60 liters. The number of loaded lamps is 20-40 pcs. depending on their size. The cover of the intake module is sealed with vacuum rubber using quick-release clamps. Connection to the pipes was performed using a flexible reinforced vacuum hose. A mechanism arranged inside the chamber was used to destroy the lamps.

The freeze-out device was made based on a cryostat with a 300 mm throat. A submersible into liquid nitrogen vessel provided with a developed freeze-out surface was mounted to the cryostat lid. The internal volume of the vessel is 5-10 liters with the possibility of collecting up to 1,0 cubic meters of xenon, which ensures the production load on the freeze-out device during one shift (8-12 hours). At the end of the shift cycle, the freeze-out device was warmed up using a stream of nitrogen gas heated in the heater 5. An excess pressure of xenon was released into the gas holder 6.

Vacuum pump 3. A high vacuum is required in the system to provide a maximum purity of xenon with minimum losses. The vacuum pump is also used to evacuate the freeze-out device and to prepare the cylinders prior to filling with xenon.

The compressor had the following characteristics:
- type: two-stage high-pressure membrane-type compressor;
- productivity: 0,5-1,5 m³/h;
- discharge pressure: 15-25 MPa;
- suction pressure: atmospheric;
- motor power: 2,5 kW;
- overall dimensions: 1,100×700×700 mm.

A flow-through electric apparatus with heating elements and adjustable capacity of up to 4kW was used as a heater.

The gas holder was made of a rubberized fabric and had a normal volume of up to 1 m³.

An MTI type vacuum pressure gauge (160mm) was used with a dial graded from - 1,0 to 3,0 kg-f/cm³ (indicating pointer-type device) - 2 pcs. The gauge was installed on the front panel "A."

An MTI type pressure gauge (160mm) was used with a dial graded from 0 to 250 kg-f/cm³. The gauge was installed on the manifold on the "G" side. It was used to show the pressure in the cylinder filled with xenon.

A cylinder for compressed inert gas was used in accordance with GOST 949-73. The cylinder was connected to the manifold installed on the "G" side.

A cryogenic tank is an additional equipment used to provide liquid nitrogen to the system. A TRZhK-7U type tank was used as an example, however, it is possible to use a tank having a different volume.

Characteristics of the TRZhK-7U type tank:
- nominal volume: 1,83 m³;
- maximum allowable operating pressure: 0,25 MPa;
- liquid nitrogen capacity: 1,430 kg;
- empty tank weight: 1,450 kg.

The tank was placed on a concrete base in the immediate vicinity of the system and connected to it using a flexible reinforced insulated hose. To fill with nitrogen from a mobile tank, a Roth hose coupling was used along with a hose for filling Dewars.

Gaseous nitrogen was supplied in 40-liter cylinders.

The cryogenic gasifier also represents an additional equipment used for warming up and purging the freeze-out device with gaseous nitrogen. The use of such gasifier is more desirable compared to compressed nitrogen in 40 L cylinders.

Technical characteristics of the GHK-200L gasifier:
- nominal volume: 200 liters;
- empty weight: 175 kg;
- productivity: up to 10 normal m³/h.

When fully charged, the gasifier replaces 24 cylinders (40 L). The gasifier is filled with nitrogen from the TRZhK type mobile tank installed at the site or at the location of a third-party liquid nitrogen manufacturer.

The filter provided filtration of the flow from the vacuum chamber to remove particles measuring 50 µm in size.

The equipment of the lamp recycling system was mounted on a welded metal frame having the following dimensions (W×D×H): 2,500×1,200×2,000 mm. The external sides were covered with metal panels. The control instruments, fittings, and loading hatch of the vacuum chamber were all assembled on the front panel "A." The gas holder was mounted on the top panel. The manifold for connecting 40L cylinders (2 pcs.) was installed on the "G" side.

To control the high vacuum level, a VTT-18-2 (or VT-6) type thermocouple vacuum gauge was used. A thermocouple vacuum gauge is designed to measure dry gas pressure in the range from 0,1 to 700 Pa (1,103 to 5 mm Hg).

The installed automated devices were used to ensure a trouble-free operation of the mechanical units of the installation, and to inform the operator of the completion of the transient processes of evacuation, heating, and compression.

Testing of the prototype device for extracting inert gas from an item comprising such inert gas has demonstrated that:
- the productivity of the lamp recycling installation (system) is determined by the duration of the chamber evacuation processes, as well as the xenon freeze-out process;
- the number of loaded lamps is determined by the volume of the intake module;
- when loading 30-40 lamps, the volume of the intake module should be at least 60 liters (pumping time: 20-30 minutes), and when loading 50-70 lamps, the volume of the intake module should be at least 100 liters (pumping time: at least 45 minutes);
- the process of loading can be organized in such a way that the lamps are loaded into cartridges with disposable bags to ensure quick replacement and protect from injuries;
- it is possible to complete 2 to 3 loadings of the intake module during an 8-hour shift, and thus, recycle 100-150 lamps per shift.

Thus, the claimed technical result (i.e., safe extraction of inert gas with minimal losses from the items comprising such inert gas, while ensuring at least 99% purity of the obtained inert gas) is achieved by the fact that prior to destroying the item comprising inert gas, the intake module is sealed, an air is pumped out of the intake module until the required vacuum is reached, and after the freeze-out device is ready for operation, said inert gas from the intake module is filtered to remove microparticles and fed to the freeze-out device, where it is liquefied and then supplied by way of heating from the freeze-out device to the gas holder, from which it is fed to the valve for dispensing the extracted inert gas.

The proposed installation has no analogues in the world and enables collection of high quality xenon with minimal possible losses. In addition, the described installation allows for automated recycling of the lamps. All processes and recycling steps can be controlled by one operator.

## Claims

1. A device for extracting inert gas from an item comprising such inert gas, comprising an intake module, which is in the form of an airtight vacuum container that comprises an inlet for receiving the item comprising inert gas, and a means for destroying the item comprising inert gas; an outlet of the intake module being connected by a pipe to a valve for dispensing the extracted inert gas, said valve being connectable to a vessel for storing the inert gas, **characterized in that** the outlet of the intake module is connected to a vacuum pump, and the outlet of the intake module is also connected by means of a pipe, via a filter, to an inlet of a freeze-out device, an outlet of which is connected to a gas holder, which is connected, via a compressor, with the valve for dispensing the extracted inert gas.

2. The device according to claim 1, **characterized in that** the freeze-out device is connected to a heater.

3. The device according to claim 1, **characterized in that** the intake module has cells in cartridges for accommodating items comprising inert gas.

4. The device according to claim 1, **characterized in that** the cartridges for accommodating items comprising inert gas are additionally placed in air-permeable polyethylene bags.

5. The device according to claim 1, **characterized in that** the means for destroying the item comprising inert gas is embodied in the form of an electric motor, which causes a movable part of the vacuum container to vibrate.

6. The device according to claim 1, **characterized in that** the pipe is provided with valves connected to an automatic control module of the device.

7. A method for extracting inert gas from an item comprising such inert gas, according to which the item comprising inert gas is placed inside an intake module, followed by destroying said item comprising inert gas and transferring the extracted inert gas via a pipe to a valve for dispensing the extracted inert gas, said valve being connectable to a vessel for storing the inert gas, **characterized in that** prior to destroying the item comprising inert gas, the intake module is sealed, an air is pumped out of the intake module until the required vacuum is reached, and after a freeze-out device is ready for operation, said inert gas from the intake module is filtered to remove microparticles and fed to the freeze-out device, where it is liquefied and then supplied by way of heating from the freeze-out device to a gas holder, from which it is fed to the valve for dispensing the extracted inert gas.

8. The method according to claim 6, **characterized in that** a waste produced by the destruction is further unloaded into a waste container.
